# EUROPÄISCHE PATENTSCHRIFT

(11) **EP 1 452 499 B1**
(45) Veröffentlichungstag und Bekanntmachung des Hinweises auf die Patenterteilung: **30.04.2014**
(21) Anmeldenummer: 03004449.9
(22) Anmeldetag: 27.02.2003
(51) Int. Cl.: C03C 8/16, C03C 17/00, C03C 17/04, B65D 51/20

(54) **Verfahren und Vorrichtung zur Beschichtung von Glasgefäßen**
Method and apparatus for coating glass containers
Méthode et appareil pour appliquer un revétement sur des récipients en verre

(43) Veröffentlichungstag der Anmeldung: 01.09.2004
(73) Patentinhaber: Heinz-Glas GmbH & Co. KGaA, 98739 Piesau (DE)
(72) Erfinder: Rebhan, Helmut, 96317 Kronach (DE)
(74) Vertreter: Graf Glück Kritzenberger

(56) Entgegenhaltungen:
- EP-A- 0 877 003
- EP-A- 0 915 027
- DE-A- 19 726 778
- FR-A- 2 510 073
- JP-A- S61 266 332
- JP-A- 2000 177 705
- NL-C- 1 005 955
- US-A- 6 010 973

## Beschreibung

Die Erfindung betrifft ein Verfahren zur Beschichtung der Mündungsoberflächen von offenen Glasgefäßen mit einem Beschichtungsmittel nach Anspruch 1, sowie eine Vorrichtung zur Beschichtung der Mündungsoberflächen nach Anspruch 10.

Glasgefäße, z. B. aus Opalglas, Kalk-Natron-Glas oder Borosilikatglas, als Verpackungsmaterial weisen, insbesondere in der Kosmetikindustrie, zusätzlich zu einer wiederverschließbaren Abdeckung häufig eine Siegelfolie auf, die die Öffnung des Glasgefäßes luftdicht versiegelt. Im Gegensatz zur wiederverschließbaren Abdeckung, welche z. B. ein Schraubdeckel oder eine Kappe sein kann, ist die Siegelfolie nicht wiederverschließbar. Eine solche Siegelfolie dient daher, neben dem Schutz des Inhaltes, auch als Originalitätsverschluss, um sicherstellen zu können, dass der Inhalt des Glasgefäßes nach der Abfüllung beim Hersteller nicht verändert wurde. Ein unbeabsichtigtes Lösen der Siegelfolie hat aus den oben genannten Gründen daher zur Folge, dass das verpackte Produkt unverkäuflich wird und dem Abfüller somit erhebliche Schäden entstehen können.

Die Siegelfolien bestehen in der Regel aus zwei Schichten: Einer Kunststoffschicht und einer Aluminiumschicht. Beim Versiegeln der Glasgefäße mit der Siegelfolie wird diese mittels eines heißen Stempels auf die Mündungsoberfläche der Glasgefäße gepresst. Durch die Einwirkung von Druck und Hitze bildet sich eine haftende Verbindung zwischen der Siegelfolie und der Mündungsoberfläche der Glasgefäße. Problematisch an diesem Verfahren ist, dass die Siegelfolien abhängig von der Materialart des Glasgefäßes und/oder den Oberflächeneigenschaften der Mündungsoberfläche unterschiedlich gut haften. Insbesondere treten beim Versiegeln von Gefäßen aus milchig weiß eingefärbtem Glas, z. B. Opalglas, Probleme mit der Haltbarkeit der Siegelfolie auf. Opalglas wird im Produktionsprozess mittels Zugabe von Fluor in die Glasschmelze eingefärbt. Fluorbestandteile und Salze treten im Laufe der Zeit aus dem Glas aus, das Glas "altert" sozusagen. Durch diesen Alterungsprozess wird eine zuverlässige Haftung der Siegelfolie auf der Mündungsoberfläche des Gefäßes aus Opalglas verhindert, so dass sich die Folie vorzeitig selbsttätig lösen kann. Auch eine besonders glatte Oberflächenstruktur der Mündungsoberfläche kann z.B. zu verminderten Hafteigenschaften der Siegelfolie führen. Um das vorzeitige Lösen zu verhindern, werden die Mündungsoberflächen beschichtet, um z. B. die Oberflächenstruktur positiv zu beeinflussen oder um den schädigenden Einfluss der z.B. aus einem Opalglas austretenden Bestandteile zu reduzieren, beziehungsweise aufzuheben.

Nach interner Kenntnis des Anmelders sind verschiedene Beschichtungsverfahren bekannt, um die schädlichen Auswirkungen des Alterns von Opalgläsern zu reduzieren. Bei einer bekannten Methode wird die Mündungsoberfläche des Glasgefäßes mit einer wässrigen Lösung von Chrom IE bestrichen, um somit die Verbindung zwischen Siegelfolie und Glasgefäß zu sichern. Da die Lösung farblos ist, ist die Kontrolle des Beschichtungsauftrags schwierig. Zum einen können Lücken in der Beschichtung übersehen werden, welche die Haftung der Siegelfolie beeinträchtigen, zum anderen können Anteile der Lösung unbemerkt in das Glasgefäß selbst gelangen und dort zu schwärzlichen Verfärbungen fuhren.

Eine weitere Beschichtungsmöglichkeit besteht nach interner Kenntnis des Anmelders darin, die Mündungsoberfläche der Glasgefäße mit einer keramischen Farbe zu bestreichen. Bei dieser Lösung ergibt sich jedoch das Problem, dass die Haltbarkeit der Verbindung und die Abzugskräfte zum Lösen der Siegelfolie unterschiedlich sind, je nachdem, ob die Wärmezufuhr beim Versiegeln induktiv oder konduktiv erfolgt ist. Da dieselben Produkte häufig auf verschiedenen Maschinen mit verschiedenen Verfahren zur Wärmezufuhr abgefüllt werden, ist diese Lösung für viele Anwendungsfalle nur bedingt geeignet.

Die FR 2 510 073 zeigt einen Deckelverschluss, bei welchem ein Dichtmittel an einer Deckeldichtung angebracht ist und mit der Mündungsoberfläche eines Glases einen Originalverschluss bildet der mit dem Aufdrehen des Deckels irreversibel zerstört wird.

Auch die EP 0 915 027 zeigt einen Behälter mit einem Deckel der eine innere Dichtfläche aufweist, wobei eine Abdichtung durch Aufschrauben des Deckels und Anwenden eines Hochdruckfrequenzverfahrens mit 450 KHz erzielt wird. Die Dichtfläche ist pergamentpapierartig und hat eine Heißschmelzschicht an ihrer Unterseite, die bei dem Hochfrequenzerhitzungsprozess mit der Mündungsoberfläche des Glases verklebt wird um so einen Originalverschluss herbeizuführen.

Es ist daher Aufgabe der vorliegenden Erfindung, ein Verfahren und eine Vorrichtung zur Beschichtung der Mündungsoberfläche von offenen Glasgefäßen zu schaffen, die die oben genannten Nachteile des Standes der Technik beseitigt werden und eine bessere Haftung von Siegelfolien auf der Mündungsoberfläche von Glasgefäßen, insbesondere von Glasgefäßen aus Opalglas, gewährleisten. Diese Aufgabe wird durch ein Verfahren gemäß Anspruch 1 und eine Vorrichtung gemäß Anspruch 10 gelöst. Vorteilhafte Weiterbildungen der Erfindung sind Gegenstand der abhängigen Ansprüche.

Aufgebracht werden Beschichtungsmittel aus mindestens einer pulverförmigen Substanz aus Glas und/oder Keramik (d.h. bei mehreren Substanzen können einige aus Glas und andere aus Keramik sein), welche in einem öligen Medium möglichst gleichmäßig in Schwebe gehalten wird. Das ölige Medium besteht aus einer Mischung eines organischen Öls als Trägersubstanz, einem Harz, um die Haftung des Beschichtungsmittels auf der Mündungsoberfläche der Glasgefäße beim Beschichten zu gewährleisten, sowie Netzmittel, um die pulverförmige(n) Substanz(en) aus Glas und/oder Keramik vor dem Absetzen und Aushärten zu bewahren. Nach dem Beschichten werden die Glasgefäße in einem Ofen erhitzt, wobei Öl, Harz und Netzmittel bevorzugt rückstandfrei verbrennen und die pulverförmigen Bestandteile als eigentliche funktionale Bestandteile der Beschichtung an der Mündungsoberfläche anhaften.

Vorzugsweise umfasst das Beschichtungsmittel eine zweite pulverförmige Substanz aus Glaspulver bzw. Keramikpulver mit höherem Schmelzpunkt als die erste Substanz. Vorzugsweise ist das zweite Glaspulver grobkörniger als das erste Glaspulver mit dem niedrigeren Schmelzpunkt. Die erste Substanz, z.B. ein Glaspulver, mit dem niedrigeren Schmelzpunkt hat bevorzugt eine Schmelztemperatur von etwa 630° C. Wenn das beschichtete Glasgefäß in einem Ofen auf eine Temperatur im Bereich zwischen 600 und 620° C, bevorzugt 610° C erhitzt wird, schmilzt ein Teil des Glaspulvers mit niedrigerem Schmelzpunkt. Dabei kommt es jedoch zu keinem endgültigen Verschmelzen mit der Mündungsoberfläche des Glasgefäßes, da die Schmelztemperatur des Glasgefäßes höher liegt und das Glas selbst daher nicht anschmilzt. Durch das Erhitzen und leichte Anschmelzen bildet sich eine gleichmäßige und lückenlose Beschichtung, welche den schädlichen Einfluss der Alterung der Glasgefäße auf die Haftung der Siegelfolien, insbesondere bei Glasgefäßen aus Opalglas, verhindert und für eine raue Oberflächenstruktur der Mündungsoberfläche sorgt, wodurch das Haftvermögen der Siegelfolie erhöht wird. Eine Schmelztemperatur des Glaspulvers mit niedrigerem Schmelzpunkt von z.B. unter 600°C hat den Nachteil, dass sich die Beschichtung bei einem eventuell nachfolgenden Dekorationsprozess, bei dem Temperaturen bis nahezu 600° C möglich sind, ein erneutes Anschmelzen dieser Substanz stattfinden kann. Bei zu hoher Schmelztemperatur kann es zu einem Anschmelzen der Glasgefäße kommen, wodurch diese unbrauchbar werden. Um gute Ergebnisse zu erzielen, hat sich ein Anteil von 50 - 55 Gew. %, bevorzugt 52 Gew. %, dieses Glaspulvers an der Beschichtungsmischung als vorteilhaft erwiesen.

Die zweite Substanz hat vorteilhaft einen wesentlich höheren Schmelzpunkt als die erste Substanz, z. B. im Schmelzbereich von 1200° bis 1300° C und ist ebenfalls ein Glaspulver bzw. ein Keramikpulver. Das zweite Glaspulver ist vorteilhaft grobkörniger als das erste Glaspulver. Das zweite Glaspulver mit höherer Schmelztemperatur dient in erster Linie dazu, eine gewünschte Oberflächenrauheit der Mündungsoberfläche der Glasgefäße zu erreichen, wodurch die Siegelnahtfestigkeit stark verbessert wird. Der Schmelzpunkt des zweiten Glaspulvers soll daher deutlich über der bevorzugten Brenntemperatur von z. B. 610° C liegen, damit das zweite Glaspulver beim Einbrennen nicht anschmilzt, wodurch die gewünschte Rauheit der Mündungsoberfläche vermindert würde. Als vorteilhaft hat sich ein Anteil von 4 bis 7 Gew. %, bevorzugt 5,5 Gew. % erwiesen. Verzichtet man auf die zweite Substanz mit höherem Schmelzpunkt kann die Oberflächenrauheit auch alleine durch die Wahl der ersten Substanz oder die Brenndauer beeinflusst werden.

Als wesentliche Trägersubstanz der mindestens einen pulverförmigen Substanz dient ein organisches Öl. Der Anteil des organischen Öls sollte im Bereich zwischen 25 und 35 Gew. % liegen, bevorzugt 30 Gew. %. Durch das Öl erhält das Beschichtungsmittel eine für den Prozess vorteilhafte Viskosität von ca. 20 sec. im 4-mm-Fließbecher. Die Verwendung eines organischen Öls hat unter anderem den Vorteil, dass das Öl beim Einbrennen der beschichteten Glasgefäße bei der bevorzugten Brenntemperatur von etwa 610° C rückstandfrei verbrennt. Wählt man den Öl-Anteil zu hoch verringert sich die Stärke der Isolierschicht aus Glas bzw. Keramik und die Stabilität der Verbindung von Siegelfolie und Glasgefäß ist nicht mehr gewährleistet. Bei zu geringem Öl-Anteil ist der Glasanteil in der Mischung zu hoch und es kann zu einem Abplatzen der Glasschicht von der Mündungsoberfläche kommen.

Zusätzlich zu dem organischen Öl enthält das Beschichtungsmittel einen Harzanteil, der für ein gutes Binden der pulverförmigen Substanzen im Medium und für eine ausreichende Haftung des Beschichtungsmittels an z.B. einem Beschichtungsband sorgt. Eine weitere wichtige Funktion des Harzes ist die Verbesserung der Hafteigenschaften des Beschichtungsmittels auf der Mündungsoberfläche der Glasgefäße, so dass das Beschichtungsmittel beim oder nach dem Beschichten nicht in das Glasgefäßinnere läuft. Der Anteil des Harzes im Beschichtungsmittel liegt vorteilhaft im Bereich zwischen 9 und 16 Gew. %, bevorzugt bei 11 Gew. %. Bei zu niedrig gewähltem Anteil der Harzkomponente wird das Beschichtungsmittel zu flüssig und es besteht die Gefahr, dass Beschichtungsmittel in das Gefäßinnere läuft. Wird der Anteil zu groß gewählt, kann das Beschichtungsmittel zu früh antrocknen, z. B. schon am Beschichtungsband bevor es auf die Mündungsoberfläche aufgetragen wird.

Ein weiterer Bestandteil des Beschichtungsmittels sind Netzmittel, welche bzw. welches im Zusammenwirken mit dem Harzanteil ein Absetzen der pulverförmigen Substanzen verlangsamt. Außerdem verhindert das Netzmittel ein Aushärten der sich bei längerer Lagerzeit abgesetzten pulverförmigen Substanzen. Ohne die Wirkung des Netzmittels würden die abgesetzten pulverförmigen Substanzen derart aushärten, dass eine Verwendung des Beschichtungsmittels nur mehr eingeschränkt möglich ist. Der Anteil des Netzmittels an dem Beschichtungsmittel liegt bei ca. 1 - 2 Gew. %, bevorzugt 1,5 Gew. %.

Das organische Öl, das Harz und das Netzmittel verbrennen vorzugsweise bei 600 bis 620° C rückstandfrei. Dadurch ist gewährleistet, dass die fertige eingebrannte Beschichtung nur noch aus den pulverförmigen Substanzen aus Glas und/oder Keramik besteht. Diese Substanzen sind in weiten Anwendungsbereichen der so beschichteten Glasgefäße, insbesondere in der Kosmetikindustrie, chemisch unbedenklich. Im Gegensatz zu chemischen Beschichtungen kann daher eine Prüfung auf eventuell vorhandene, unerwünschte chemische Rückstände des Beschichtungsmittels weitgehend unterbleiben. Damit ist das erfindungsgemäße Beschichtungsmittel sehr wirtschaftlich. Außerdem kann die Kontrolle der Beschichtungsgüte mit optischen Messverfahren kontrolliert werden, da die durch die Glaskomponenten bestimmte Oberflächenstruktur mit optischen Mitteln einfach erfassbar ist.

Das Beschichtungsmittel wird bevorzugt auf die kalten Mündungsoberflächen der Glasgefäße aufgetragen und anschließend zusammen mit den Glasgefäßen in einem Ofen auf 600 bis 620° C, bevorzugt 610° C erhitzt. Die beschichteten Glasgefäße werden dabei so lange erhitzt, bis die pulverförmige Substanz mit dem niedrigeren Schmelzpunkt zumindest teilweise anschmilzt. Zum Auftragen des Beschichtungsmittels hat es sich als vorteilhaft erwiesen, das Beschichtungsmittel auf etwa 30° C zu temperieren. Im Ofen werden die beschichteten Glasgefäße vorzugsweise so lange erhitzt, bis das organische Öl, das Harz und das Netzmittel rückstandfrei verbrannt sind.

Zur Beschichtung der Mündungsoberflächen der offenen Glasgefäße wird ein umlaufendes Beschichtungsband verwendet. Die zu beschichtenden Glasgefäße werden dem Beschichtungsband kontinuierlich zugeführt, wobei die Zufuhrgeschwindigkeit und Richtung der Glasgefäße der Bandgeschwindigkeit und Richtung entspricht. Dies hat den Vorteil, dass bei Berührung des Beschichtungsbandes mit der Mündungsoberfläche keine relative Bewegung zwischen Beschichtungsband und Mündungsoberfläche stattfindet, wodurch ein Abstreifen des Beschichtungsmittel vom Beschichtungsband vermieden wird. Ein solches Abstreifen hätte den Nachteil, dass Beschichtungsmittel sehr leicht in das Innere der Glasgefäße gelangen kann. Das Beschichtungsband wird über eine Verteileinrichtung, z. B. eine Düse von einer Dosiereinrichtung auf das Band aufgetragen. Die Dosiereinrichtung und die Verteileinrichtung sind vorzugsweise mit Heiz- oder Kühlmitteln versehen, um das Beschichtungsmittel auf einer bevorzugten Verarbeitungstemperatur von 30° C zu halten. Weiter ist die Vorrichtung mit Abstreifvorrichtungen versehen, um überschüssiges Beschichtungsmittel vom Band abzustreifen. Das Band besteht vorzugsweise aus einem Polyurethan-Material, welches eine gewisse Saugfähigkeit für das Beschichtungsmittel aufweist.

Um ein sauberes Auftragen des Beschichtungsmittels auf die Mündungsoberfläche der Glasgefäße zu ermöglichen und um insbesondere ein Verschmutzen des Inneren der Glasgefäße zu verhindern, muss die Berührung von Beschichtungsband und Mündungsoberfläche mit möglichst wenig Druck erfolgen.

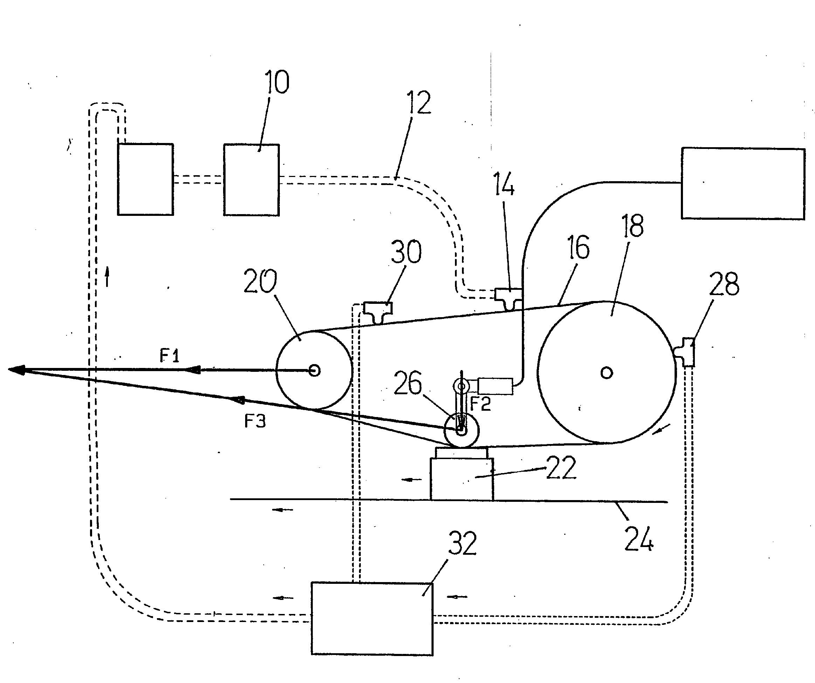

Im Folgenden wird das Beschichtungsverfahren und eine Beschichtungsvorrichtung zur Auftragung des erfindungsgemäßen Beschichtungsmittels anhand eines Ausführungsbeispiels mittels der beigefügten Zeichnung detaillierter beschrieben.

Das Beschichtungsmittel wird von einer Dosiereinrichtung 10 über eine Zufuhrleitung 12 zu einer als Verteileinrichtung dienenden Düse 14 geleitet. Dosiereinrichtung 10 und Düse 14 können beheizt werden, um das Beschichtungsmittel auf einer für die Verarbeitung vorteilhaften Temperatur von ca. 30° C zu halten. Die Düse 14 verteilt das Beschichtungsmittel gleichmäßig auf ein Beschichtungsband 16 aus Polyurethan (PU). Dieses PU-Band besitzt eine saugfähige (aufnahmefreudige) Oberfläche bezüglich der Konsistenz des Beschichtungsmittels. Das umlaufende Band 16 wird von einer Antriebsrolle 18 angetrieben und um eine Umlenkrolle 20 geführt. Die zu beschichtenden Glasgefäße 22 werden mittels einer Transporteinrichtung 24 (angedeutet) unter das Beschichtungsband geführt. Die Transportgeschwindigkeit und -richtung der Glasgefäße 22 entspricht der Laufgeschwindigkeit und Laufrichtung des Beschichtungsbandes 16. Eine Andruckrolle 26 bringt das Beschichtungsband 16 in eine für die Beschichtung günstige Position, so dass das Beschichtungsband 16 im Wesentlichen parallel zu der Ebene der Mündungsoberfläche der Glasgefäße 22 ist. Die Andruckrolle 26 ist bevorzugt schwimmend gelagert, d. h. in senkrechter Richtung, in Richtung des Pfeils F2, beweglich. Die Rotationsachse der Andruckrolle 26 ist ebenfalls pendelnd gelagert, damit sich die Andruckrolle sowohl an verschiedene Glasgefäßhöhen als auch an leichte Unebenheiten der Mündungsoberfläche gut anpassen kann. Die Andruckkraft der Andruckrolle 26 resultiert aus der Gewichtskraft der Rolle in Richtung des Pfeils F2. Um das Eindringen von Beschichtungsmitteln in die Glasgefäße zu verhindern, sollte der Anpressdruck des Beschichtungsbandes 16 auf die Mündungsoberfläche der Glasgefäße 22 so gering wie möglich sein. Um die Andruckkraft des Beschichtungsbandes auf die Mündungsoberfläche der Glasgefäße 22 zu vermindern und von Schwankungen der Glasgefäßhöhe zu befreien, ist die Umlenkrolle 20 daher mit einer Spannvorrichtung (nicht abgebildet) versehen, die auf die Umlenkrolle eine Kraft in Richtung F1 ausübt und somit das Beschichtungsband 16 spannt und eine Gegenkraft gegen die Gewichtskraft der Andruckrolle 26 erzeugt. Im günstigsten Fall ist die Gewichtskraft der Andruckrolle 26 größtenteils eliminiert. Die Vorrichtung ist weiter mit Abstreif- 28, 30 und Rückführvorrichtungen 32 versehen, um überschüssiges Beschichtungsmittel vom Band 16 abzutragen und der Dosiervorrichtung 10 wieder zuzuführen. Die Abstreifvorrichtungen 28, 30 sind derart positioniert, dass sie das Band 16 selbst nicht berühren, sondern ein kleiner Spalt zwischen Band und Abstreifvorrichtung verbleibt. Die Abstreifvorrichtungen dienen auch zur Glättung und gleichmäßigen Verteilung des auf dem Band verteilten Beschichtungsmittels. Da Band und Abstreifvorrichtung nicht in Berührung kommen, erhöht sich die Haltbarkeit des Bandes.

Nach dem Beschichtungsvorgang zieht sich das Beschichtungsmittel durch ein ausgewogenes Spiel aus Adhäsion und Kohäsion zu einem sauberen und gleichmäßigen Kreisring auf der Mündungsoberfläche zusammen. Im anschließenden Brennprozess werden die Glas- bzw. Keramiksorten auf die Mündungsoberfläche aufgesintert, so dass die bereits beschriebene raue Oberflächenstruktur erzielt wird.

Die Mündungsbeschichtung zeichnet sich dadurch aus, dass sie ohne Einschränkung mindestens 2 Jahre bei dem ungefüllten und unverschlossenen Produkt wirksam ist, während bekannte Mündungsbeschichtungen mit diversen chemisch-wässrigen Lösungen nach ca. 6 Wochen einen erneuten Beschichtungsprozess unterschreiten mussten. Ein weiterer positiver Nebeneffekt ist der, dass die Beschichtung bereits fertig den Veredelungsbetrieben - z.B. Druckereien - angeliefert werden kann. Die Veredelung (Dekordruck) wird nachträglich durchgeführt, sowie der Artikel entsprechend der Vorgaben der Farbhersteller im Einbrennofen wiederholt gebrannt wobei der Beschichtung kein Nachteil entsteht. Beim System nach dem Stand der Technik ist so etwa nicht möglich, da wässrige Lösungen im Bereich größer 95°C ihre Wirkung verlieren.

## Patentansprüche

1. Verfahren zur Beschichtung der Mündungsoberfläche von offenen Glasgefäßen, insbesondere Opalglasgefäßen, mit einem Beschichtungsmittel zur Beschichtung der Mündungsoberfläche von offenen Glasgefäßen, insbesondere Opalglasgefäßen, zur Bildung einer Haftunterlage für Siegelfolien, welches Beschichtungsmittel aus mindestens einer pulverförmigen Substanz aus Glas oder Keramik besteht, einem organischen Öl als Trägersubstanz, einem Harz, um die Haftung des Beschichtungsmittels auf der Mündungsoberfläche zu gewährleisten, sowie einem Netzmittel, um die pulverförmige Substanz aus Glas oder Keramik vor dem Absetzen und Aushärten zu bewahren, wobei das Beschichtungsmittel im Durchlaufverfahren im Wesentlichen druckfrei von einem Beschichtungsband auf die Mündungsoberfläche übertragen wird..

2. Verfahren nach Anspruch 1,
**dadurch gekennzeichnet, dass** ein Beschichtungsmittel verwendet wird, das eine zweite pulverförmige Substanz aus Glas oder Keramik mit höherem Schmelzpunkt als die erste Substanz umfasst.

3. Verfahren nach Anspruch 2,
**dadurch gekennzeichnet, dass** ein Beschichtungsmittel verwendet wird, bei dem die zweite pulverförmige Substanz grobkörniger als die erste Substanz ist.

4. Verfahren nach Anspruch 2 oder 3,
**dadurch gekennzeichnet, dass** ein Beschichtungsmittel verwendet wird, bei dem die feinpulverige erste Substanz einen Schmelzpunkt von etwa 630°C und die grobkörnigere zweite Substanz einen Schmelzpunkt von etwa 1200 - 1300°C hat.

5. Verfahren nach einem der Ansprüche 2 bis 4,
**dadurch gekennzeichnet, dass** ein Beschichtungsmittel verwendet wird, bei dem
- die erste Substanz mit dem niedrigeren Schmelzpunkt im Beschichtungsmittel einen Anteil von ca. 50 - 55 Gew. %, bevorzugt 52 Gew. % hat,
- die zweite Substanz mit dem höheren Schmelzpunkt einen Anteil von ca. 4 - 7 Gew. %, bevorzugt 5,5 Gew. % hat,
- das organische Öl einen Anteil von ca. 25 - 35 Gew. %, bevorzugt 30 Gew. % hat,
- das Harz einen Anteil von ca. 9 - 16 Gew. %, bevorzugt 11 Gew. % hat und
- das Netzmittel einen Anteil von ca. 1 - 2 Gew. %, bevorzugt 1,5 Gew. % hat.

6. Verfahren nach einem der vorhergehenden Ansprüche,
**dadurch gekennzeichnet, dass** das organische Öl, das Harz und das Netzmittel beim Erhitzen der beschichteten Glasgefäße auf ca. 600 - 620°C rückstandsfrei verbrannt werden.

7. Verfahren nach Anspruch 6,
**dadurch gekennzeichnet, dass** die Glasgefäße nach dem Beschichten in einem Brennofen auf 600 - 620°C, bevorzugt 610°C, erhitzt werden, bis die erste Substanz mit dem niedrigeren Schmelzpunkt zumindest teilweise anschmilzt.

8. Verfahren nach Anspruch 7,
**dadurch gekennzeichnet, dass** die Glasgefäße solange erhitzt werden, dass das organische Öl, das Harz und das Netzmittel rückstandfrei verbrennen.

9. Verfahren nach einem der Ansprüche 1 bis 8,
**dadurch gekennzeichnet, dass** das Beschichtungsmittel zum Auftragen auf die Mündungsoberfläche der Glasgefäße auf ca. 30°C temperiert wird.

10. Vorrichtung zur Beschichtung der Mündungsoberfläche von offenen Glasgefäßen, insbesondere Opalglasgefäßen mit einem Beschichtungsmittel gemäß einem Verfahren nach einem der Ansprüche 1 bis 9, zur Bildung einer Haftunterlage für Siegelfolien, umfassend ein umlaufendes Beschichtungsband, eine Dosiereinrichtung zum Aufbringen des Beschichtungsmittels auf das Band und eine Andruckrolle zur Anlage des Bandes auf der Mündungsoberfläche, **dadurch gekennzeichnet, dass** die Andruckrolle (26) schwimmend gelagert ist und eine Umlenkrolle (20) des Beschichtungsbandes (16) mit einer Spannvorrichtung versehen ist, welche das Beschichtungsband mit einer solchen Kraft belegt, dass sie das Auflagegewicht der Andruckrolle (26) auf der zu beschichtenden Mündungsoberfläche im Wesentlichen neutralisiert.

11. Vorrichtung nach Anspruch 10,
**dadurch gekennzeichnet, dass** das Beschichtungsband (16) ein PU-Band ist.

12. Vorrichtung nach Anspruch 10 oder 11,
**dadurch gekennzeichnet, dass** das Beschichtungsband (16) mit einer Geschwindigkeit entsprechend der Fördergeschwindigkeit der Glasgefäße (22) angetrieben ist.

## Claims

1. Method for coating the mouth surface of open glass vessels, in particular opal glass vessels, with a coating agent for coating the mouth surface of open glass vessels, in particular opal glass vessels, to form an adhesive base layer for sealing films, which coating agent consists of at least one pulverulent glass or ceramic substance, an organic oil as a vehicle, a resin to provide adhesion of the coating agent to the mouth surface, and a wetting agent to keep the pulverulent glass or ceramic substance from sedimenting and hardening, wherein the coating agent is transferred onto the mouth surface from a coating band substantially without pressure in a continuous process.

2. Method according to claim 1, **characterised in that** a coating agent is used which comprises a second pulverulent glass or ceramic substance having a higher melting point than the first substance.

3. Method according to claim 2, **characterised in that** a coating agent is used in which the second pulverulent substance is coarser than the first substance.

4. Method according to either claim 2 or claim 3, **characterised in that** a coating agent is used in which the finer first substance has a melting point of approximately 630 °C and the coarser second substance has a melting point of approximately 1200 - 1300 °C.

5. Method according to any one of claims 2 to 4, **characterised in that** a coating agent is used in which
the first substance having the lower melting point has a content in the coating agent of approximately 50 - 55 % by weight, preferably 52 % by weight,
the second substance having the higher melting point has a content of approximately 4 - 7 % by weight, preferably 5.5 % by weight,
the organic oil has a content of 25 - 25 % by weight, preferably 30 % by weight,
the resin has a content of approximately 9 - 16 % by weight, preferably 11 % by weight, and
the wetting agent has a content of approximately 1 - 2 % by weight, preferably 1.5 % by weight.

6. Method according to any one of the preceding claims, **characterised in that** the organic oil, the resin and the wetting agent are combusted without residue when the coated glass vessels are heated to approximately 600 - 620 °C.

7. Method according to claim 6, **characterised in that**, after coating, the glass vessels are heated to 600 - 620 °C, preferably 610 °C, in a furnace until the first substance having the lower melting point melts on at least in part.

8. Method according to claim 7, **characterised in that** the glass vessels are heated until the organic oil, the resin and the wetting agent are combusted without residue.

9. Method according to any one of claims 1 to 8, **characterised in that** the coating agent is tempered to approximately 30 °C for application to the mouth surface of the glass vessel.

10. Device for coating the mouth surface of open glass vessels, in particular opal glass vessels, with a coating agent by a method according to any one of claims 1 to 9, to form an adhesive base layer for sealing films, comprising a revolving coating band, a metering device for applying the coating agent to the band, and a contact pressure roller for applying the band to the mouth surface, **characterised in that** the contact pressure roller (26) is mounted floatingly and a guide roller (20) of the coating band (16) is provided with a tensioning device which applies to the coating band a force such as substantially to neutralise the contact weight of the contact pressure roller (26) on the mouth surface to be coated.

11. Device according to claim 10, **characterised in that** the coating band (16) is a polyurethane band.

12. Device according to either claim 10 or claim 11, **characterised in that** the coating band (16) is driven at a speed corresponding to the conveying speed of the glass vessels (22).

## Revendications

1. Procédé de revêtement de la surface d'embouchure de récipients ouverts en verre, en particulier de récipients en verre opale, avec un moyen de revêtement pour recouvrir la surface d'embouchure de récipients ouverts en verre, en particulier de récipients en verre opale, pour former un support d'adhésion pour films de scellage, ledit moyen de revêtement étant composé d'au moins une substance poudreuse en verre ou céramique, d'une huile organique servant de support, d'une résine pour assurer l'adhésion du moyen de revêtement sur la surface d'embouchure, ainsi que d'un agent mouillant pour empêcher la sédimentation ou le durcissement de la substance poudreuse en verre ou céramique, le moyen de revêtement étant transposé sur la surface d'embouchure dans le procédé de passage sensiblement sans pression de la bande de revêtement.

2. Procédé selon la revendication 1, **caractérisé en ce qu'**un moyen de revêtement est utilisé, lequel comprend une seconde substance poudreuse en verre ou céramique présentant un point de fusion plus élevé pour servir de première substance.

3. Procédé selon la revendication 2, **caractérisé en ce qu'**un moyen de revêtement est utilisé, dans lequel la seconde substance poudreuse a des grains plus gros que la première substance.

4. Procédé selon la revendication 2 ou 3, **caractérisé en ce qu'**un moyen de revêtement est utilisé, dans lequel la première substance de poudre fine a un point de fusion d'environ 630°C et la seconde substance à grains plus gros a un point de fusion d'environ 1 200 à 1 300°C.

5. Procédé selon une des revendications 2 à 4, **caractérisé en ce qu'**un moyen de revêtement est utilisé, dans lequel
- la première substance ayant le point de fusion le plus faible représente dans le moyen de revêtement une proportion d'environ 50 à 55 % en poids, de préférence 52 % en poids,
- la seconde substance ayant le point de fusion plus élevé représente une proportion d'environ 4 à 7 % en poids, de préférence 5,5 % en poids,
- l'huile organique représente une proportion d'environ 25 à 35 % en poids, de préférence 30 % en poids,
- la résine représente une proportion d'environ 9 à 16 % en poids, de préférence 11 % en poids, et
- l'agent mouillant représente une proportion d'environ 1 à 2 % en poids, de préférence 1,5 % en poids.

6. Procédé selon une des revendications précédentes, **caractérisé en ce que** l'huile organique, la résine et l'agent mouillant sont cuits sans résidu lors du chauffage à environ 600 à 620°C des récipients en verre recouverts.

7. Procédé selon la revendication 6, **caractérisé en ce que** les récipients en verre, après le revêtement, sont chauffés dans un fourneau à 600 à 620°C, de préférence 610°C, jusqu'à ce que la première substance avec le point de fusion plus faible fusionne au moins partiellement.

8. Procédé selon la revendication 7, **caractérisé en ce que** les récipients en verre sont chauffés jusqu'à ce que l'huile organique, la résine et l'agent mouillant soient cuits sans résidu.

9. Procédé selon une des revendications 1 à 8, **caractérisé en ce que** le moyen de revêtement est mis à une température d'environ 30°C pour l'appliquer sur la surface d'embouchure des récipients en verre.

10. Dispositif de revêtement de la surface d'embouchure de récipients ouverts en verre, en particulier de récipients en verre opale, avec un moyen de revêtement selon un procédé selon une des revendications 1 à 9, pour former un support d'adhésion pour films de scellage, comprenant une bande de revêtement périphérique, un système de dosage pour appliquer le moyen de revêtement sur la bande et un rouleau de compression pour installer la bande sur la surface d'embouchure, **caractérisé en ce que** le rouleau de compression (26) est monté flottant et un rouleau de guidage (20) de la bande de revêtement (16) est muni d'un système de serrage qui place la bande de revêtement avec une telle force qu'elle neutralise sensiblement le poids d'appui du rouleau de compression (26) sur la surface d'embouchure à recouvrir.

11. Dispositif selon la revendication 10, **caractérisé en ce que** la bande de revêtement (16) est une bande PU.

12. Dispositif selon la revendication 10 ou 11, **caractérisé en ce que** la bande de revêtement (16) est entraînée à une vitesse correspondant à la vitesse d'avancée des récipients en verre (22).
